# EUROPEAN PATENT APPLICATION

(11) **EP 0 615 967 A1**
(43) Date of publication of application: **21.09.1994**
(21) Application number: 94610016.1
(22) Date of filing: 21.03.1994
(51) Int. Cl.: C05F 17/02

(54) **Machine for ventilating mulch clamps**

(30) Priority: 19.03.1993 DK 314/93
(71) Applicant: TIM MASKINFABRIK A/S, DK-6980 Tim (DK)
(72) Inventor: Pedersen, Osvald, DK-6980 Tim (DK)
(74) Representative: Pedersen, Soeren Skovgaard

(57) **Abstract**

A compost bed aerator for aerating composted refuse or the like by displacement of the bed comprises two milling cylinders (8, 10) rotating in opposite directions for peeling off a layer of the side of the bed and transferring the material between them onto an elevator (22). The material may thereby be delivered in the longitudinal axis of the elevator. As the rearmost cylinder (10) projects outwards with respect to the foremost (8) the capacity is increased significantly, as two layers are peeled off simultaneously.

## Description

The present invention concerns a so-called compost bed aerator with a milling cylinder which during displacement along a compost bed may peel a layer off it and transfer it to an elevator in the shape of an inclined conveyor belt.

Compost bed aerators are used in connection of the composting of comminuted refuse disposed in longitudinal beds of a trapeze shaped or triangular cross section. In order to promote composting the refuse must from time to time be areated which occurs by disposing the bed sideways. A compost bed aerator is i.a. known from EP 0 448 968 A2, comprising a single milling cylinder which creates problems in the transfer of the peeled-off material for the conveyor belt. The material is flung onto one side of the conveyor belt against the side wall where it is deposited as a heap.

By means of the invention a compost bed aerator of the kind indicated in the introduction is provided which is particular in that it comprises at least two milling cylinders with opposite directions of rotation whereby the loosened material may be delivered to the centre of the belt conveyor. The material which is peeled off by the front cylinder is caught by the the rear cylinder so that an even flow of material is created between the two cylinders. By letting the rear cylinder project with respect to the front cylinder the capacity is increased because two layers are peeled off the bed simultaneously. Similarly the front cylinder may have a smaller diameter than the rear cylinder. A similar result will be obtained if the rear cylinder is provided with milling elements which are longer than those of the front cylinder.

The projecting milling elements or scrapers are advantageously disposed on one or more helices and in such a manner that they are oriented in such a way on the lower part of the cylinders that they throw the peeled-off material upwards onto the conveyor belt while they are oriented oppositely on the upper part of the cylinders in order that they send the material down and onto the belt conveyor. In order to restrain the peeled--off material further on the conveyor belt a cover is disposed in connection with the side walls of the elevator which runs from the milling cylinders across the elevator and at an angle towards the conveyor belt.

In order to maximize the peeling-off from the bed the milling cylinders may be inclined according to the side of the compost bed, i.e. they may be continuously be adjusted according to the slope of the side of the bed. The milling cylinders are advantageously mounted in a frame which is disposed on a longitudinal horizontal axis at the lower end of the chassis of the machine, and the adjustment is performed by means of hydraulic cylinders which act between the frame and the chassis.

In order to re-deposit the bed with a sufficient height and simultaneously to keep the machine compact in construction, i.a. in order that it may be transported on the road without problems the elevator is made in two or more longitudinal sections, e.g. with an outermost section which may be swung down or reach over the machine or arranged telescopically so that it may be pulled out or in.

In order to collect the material from the bottom of the compost bed and to have sufficient road clearance during transport the cylinders may be raised or lowered. The drawbar is bisected around a transverse axis, the angle between the two sections is controlled by means of a hydraulic cylinder disposed between the front part of the drawbar and the chassis. In the folded position of the drawbar the front of the machine and hence the milling cylinders are lowered. A set of drive wheels at the rear may be raised and lowered by means of a hydraulic cylinder for lowering and raising the rear end of the machine.

An embodiment of the invention will be described in detail with reference to the appended drawing which schematically shows the principle in the compost bed aerator.

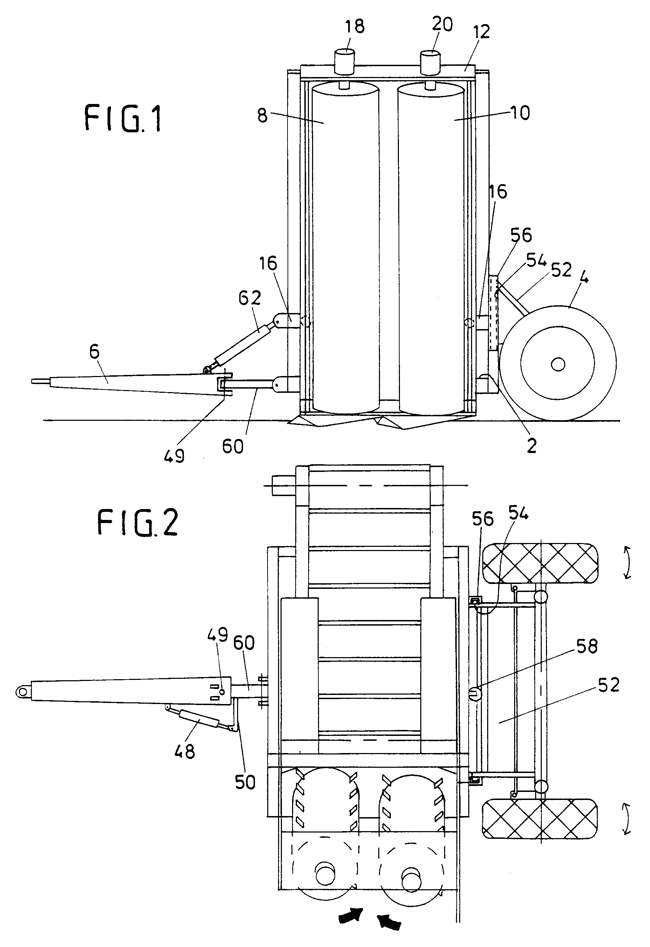

Fig. 1 shows the compost bed aerator in a sideways view towards the milling cylinders,
Fig. 2 shows the compost bed aerator from above,
Fig. 3 shows the compost bed aerator from above in its operational position,
Fig. 4 shows the compost bed aerator from the rear with the milling cylinders in engagement with a compost bed, and

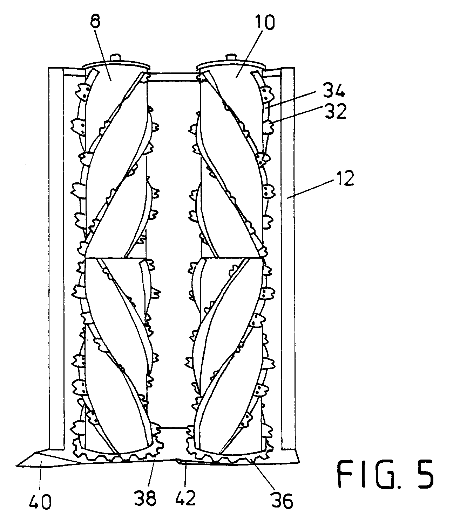

Fig. 5 is a straight sideways view of the milling cylinders.

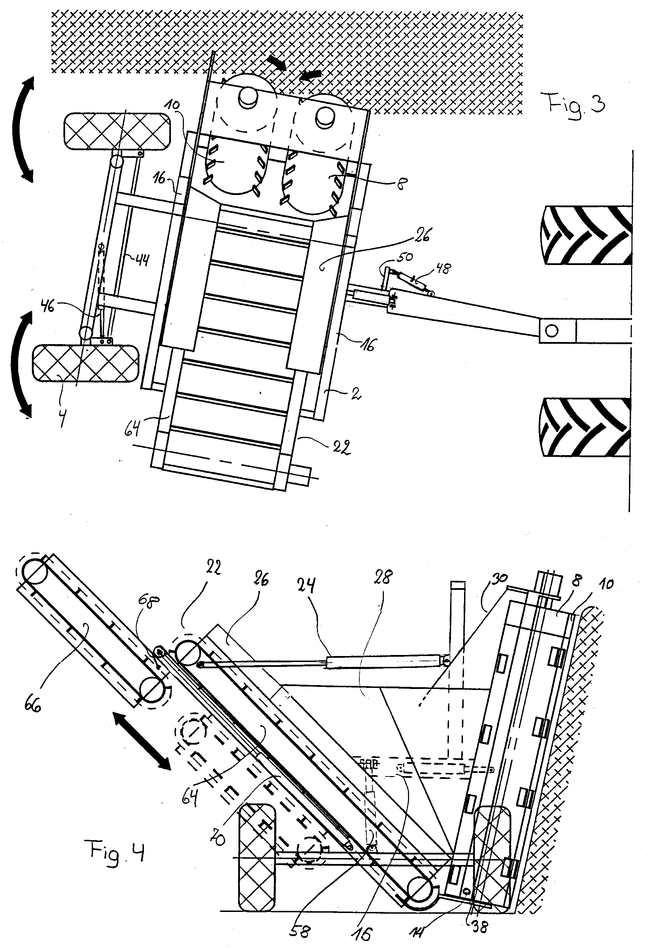

The compost bed aerator is constructed on a chassis 2 provided at the rear with drive wheels 4 and is designed for being attached to a tractor by means of a drawbar 6 at the front. Furthermore the compost bed aerator comprises two milling cylinders 8, 10 disposed in a frame 12, which is tiltable around journals 14 in order that the inclination of the milling cylinders may be adjusted according to the slope of the side of the bed. The adjustment of the angle may be performed by means of hydraulic cylinders which are disposed behind the side members 16 of the chassis. The milling cylinders are driven by individual hydraulic motors 18, 20 and run with opposite directions of rotation. The two milling cylinders are disposed in a staggered manner so that the rearmost as seen in the direction of travel protrudes with respect to the foremost cylinder. Both the front and rear cylinder will peel a layer off the compost bed and carry the material rearwards between the cylinders or rather sidewards in the machine onto an elevator 22 in the form of a belt conveyor disposed centrally with respect to the cylinders in order that the material is delivered to the centreline of the conveyor belt. The elevator which is mounted across the machine is fitted rotatably to the chassis and the inclination may be adjusted by means of hydraulic cylinders 24. Furthermore the elevator is driven by an individual hydraulic motor. In order to keep the material on the conveyor belt it is enclosed by side walls 26 which are slanted towards the centre line, while the between the milling cylinders and the elevator as such is enclosed by side plates 28 which have been shown transparent on Fig. 4 for clarity s sake. Similarly there is a cover 30 which reaches from the top part of the milling cylinders and fitted to the frame and which reaches across and towards the conveyor belt in order to prevent the material from being sent backwards uncontrollably.

The construction of the milling cylinders contributes to collecting the material on the conveyor belt. The cylinders consist of a cylinder with a set of milling elements on the top and the bottom part respectively. The milling elements in the shape of scrapers 32 are bolted to strips 34 disposed helically on the cylinders. Three such strips are placed with an interval of 120o from each other on each part, and the two sets are displaced 60o with respect to each other at the centre of the cylinder. On the lower part the helical strips ensure that the material is lifted and carried towards the top of the conveyor in supplement to the effect obtained by the inclined cylinders. On the upper part the helical strips run oppositely whereby the material is directed downwards towards the inclined belt conveyor. At their lower end the milling cylinders are fitted with a circumferential serrated rim 36 which slides on the bottom plate of the frame 38. In order to clean the surface on which the compost bed is deposited the bottom plate is supplied with wedgeshaped shears 40, 42 in front of the two cylinders.

The compost bed aerator may be shifted sideways as shown in Fig. 3 by means of drive wheels 4 which may swivel and which are connected by a rod 44. The angular position of the wheels is adjusted by means of a hydraulic cylinder 46. The drawbar has a link 48 and a turnbuckle 48 fitted to either side of the link in order that shortening or lengthening of the turnbuckle changes the angle of the drawbar. One side of the turnbuckle is fitted to a projecting arm 50.

The milling cylinders may be raised and lowered by a particular disposition of the drawbar and the fitting of the drive wheels to the machine. The drive wheels are fitted in a separate frame 52 with two vertical legs 54 mounted telescopically in U-rails 56 in the chassis. The frame with drive wheels may be raised and lowered by means of a vertical hydraulic cylinder 58 which is fixed to the frame and to the chassis. By raising the wheels the rear end of the machine is lowered and vice versa. The front is lowered by the fitting of the rear part 60 of the drawbar via a horizontal link to the chassis. By means of a hydraulic cylinder 62 between the chassis and the drawbar the angle between them may be changed in order that the machine is lowered and raised, respectively. In this manner the distance between the milling cylinders and the soil may be adjusted.

The elevator 22 comprises a fixed part 64 and an extendable extensive part 66, whereby a compost bed may be made higher and wider because of the wider reach of the elevator. The extension 66 is supported by travelling rails on the lower side of the fixed elevator 64 in that the travelling rails are fitted to the lower side of its side members. The extension takes place by draw wires 68 and hydraulic cylinders 70. The hydraulic cylinder 70 is fitted to the side of the fixed elevator part 64. A wire 68 is fitted to the lower end of the extension 66 and taken around a pulley on the cylinder and its other end fitted to the fixed elevator 64. By extending the cylinder the extension 66 is pulled out. In its transport position the elevator is folded up and the extension is pulled in below the fixed elevator part in order that the machine is held within the fixed maxima for width, height, and length relating to road transportation.

As will have been apparent the machine is driven entirely hydraulically, with an integral oil pump driven by the power outlet of the tractor.

By means of the invention an efficient and reliable compost bed aerator having a large capacity has been provided. It will be understood that the area of use of the compost bed aerator is not limited to the sideways shifting of a compost bed. It may obviously be used for other material than waste material, and it may similarly be used for loading.

## Claims

1. A compost bed aerator with a milling cylinder which during displacement along a compost bed may peel a layer off it and transfer it to an elevator (22) in the shape of an inclined conveyor belt, **characterized** in that it comprises at least two milling cylinders (8, 10) rotating in opposite directions.

2. An aerator according to claim 1, **characterized** in that the rearmost milling cylinder (8) as seen in the direction of travel projects outwards with respect to the foremost cylinder (10).

3. An aerator according to claim 1 or 2, **characterized** in that the rearmost milling cylinder has a larger diameter than the foremost cylinder (10).

4. An aerator according to claim 1, **characterized** in that the milling elements of the milling cylinders are constituted by a number of projecting scrapers (32) disposed on one or more, preferably three helices (34).

5. An aerator according to claim 4, **characterized** in that the scrapers of the lower parts of the milling cylinders are disposed such that they carry the peeled-off material up onto the conveyor (22) while the scrapers of the upper parts are disposed such that they carry the peeled-off material down to the conveyor.

6. An aerator according to claim 1, **characterized** in that the milling cylinders may be angled sideways about a horizontal axis (14) in the longitudinal direction in order to adapt to the sides of the compost bed.

7. An aerator according to claim 6, **characterized** in that the milling cylinders are mounted in a frame (12) which is pivotally supported on a horizontal axis (14) at the lower end of the chassis and in which the angular position with respect to the compost bed is controlled by hydraulic cylinders (15) or similar means.

8. An aerator according to claim 1, 4, or 5 **characterized** in that a cover (30) is fitted from the top of the milling cylinders across and facing the conveyor which conducts the material flow from the cylinders towards the conveyor belt.

9. An aerator according to claim 1, **characterized** in that the elevator (22) is divided into at least two sections (64, 66), in which the outermost sections (66) may be swivelled or displaced to fit inside the outer contours of the machine.

10. An aerator according to claim 1, **characterized** in that the milling cylinders are raised or lowered by angling a drawbar (6) linked to the machine by means of a hydraulic cylinder while the drive wheels (4) may be raised or lowered.
